# EUROPÄISCHE PATENTSCHRIFT

(11) **EP 1 296 440 B1**
(45) Veröffentlichungstag und Bekanntmachung des Hinweises auf die Patenterteilung: **05.03.2008**
(21) Anmeldenummer: 02017551.9
(22) Anmeldetag: 07.08.2002
(51) Int. Cl.: H02K 51/00, B60K 17/348, B60K 17/346, B60K 23/08, B60K 6/20

(54) **Antriebseinheit eines Fahrzeugs**
Drive unit for vehicles
Groupe motopropulseur pour véhicules

(30) Priorität: 20.09.2001 DE 10146386
(43) Veröffentlichungstag der Anmeldung: 26.03.2003
(73) Patentinhaber: GKN Automotive GmbH, 53797 Lohmar (DE)
(72) Erfinder: Nett, Hans-Peter, 53518 Adenau (DE)
(74) Vertreter: Neumann, Ernst Dieter

(56) Entgegenhaltungen:
- EP-A- 1 125 780
- DE-A1- 4 401 473
- DE-A1- 19 639 904
- DE-A1- 19 915 926
- DE-A1- 19 916 489
- FR-A- 2 786 137
- US-A- 1 558 806
- US-A- 5 309 778

## Beschreibung

Die Erfindung betrifft eine Antriebseinheit, insbesondere für ein mehrachsgetriebenes Kraftfahrzeug, welches eine Primärantriebsquelle, speziell einen Motor und mit diesem verbunden ein Getriebe mit veränderlicher Übersetzung, zum alleinigen Antrieb einer ersten Antriebsachse sowie eine Sekundärantriebsquelle, die zusammen mit der Primärantriebsquelle über ein Überlagerungsgetriebe dem Antrieb einer zweiten Antriebsachse dient, aufweist.

Aus der DE 42 23 296 C2 ist ein Antriebssystem für allradangetriebene Kraftfahrzeuge bekannt. Ein Verbrennungsmotor mit einem Schaltgetriebe treibt über einen ersten Antriebsstrang direkt eine erste Antriebsachse an. Ein zweiter Antriebsstrang weist ein Überlagerungsgetriebe mit zwei Eingängen und einem Ausgang, welcher zum Antrieb der zweiten Antriebsachse des Kraftfahrzeuges dient, auf. Der erste Eingang wird von der Ausgangswelle des Schaltgetriebes mit konstanter Übersetzung angetrieben. Der zweite Eingang des Überlagerungsgetriebes wird über ein stufenloses Zugmittelgetriebe mit variabler Drehzahl angetrieben. Dabei ist das Zugmittelgetriebe mit der Ausgangswelle des Schaltgetriebes antriebsverbunden. Eine räumliche Entkopplung des Überlagerungsgetriebes vom Schaltgetriebe ist nicht möglich.

Aus der US 5 309 778 ist ein Getriebe für Landfahrzeuge zur variablen Drehmomentverteilung zwischen einer Eingangswelle und einer Ausgangswelle bekannt. Das Getriebe umfaßt eine dritte Welle zum Antrieb einer Ausgleichsanordnung, die beispielsweise ein Schwungrad zum Antreiben eines Generators oder eine Thyrister-Batterie-Anordnung umfaßt. Ein dem Getriebe nachgeschalteter Generator, der einen Rotor und einen Stator umfaßt, kann als Motor zum Anlassen eines Verbrennungsmotors oder als Generator zur Erzeugung elektrischer Energie betrieben werden.

Aus der FR 2 786 137 ist ein Kraftfahrzeug mit einem Hybridantrieb bekannt, das teilweise von einem Elektromotor oder von einem Verbrennungsmotor angetrieben werden kann. Die Antriebseinheit umfaßt eine vom Verbrennungsmotor angetriebene Primärwelle, eine Sekundärwelle zum Antreiben der Antriebsachse und ein dazwischen geschaltetes elektromechanisches Differential. Das elektromechanische Differential kann dabei sowohl als Generator zum Speichern von Energie, als auch als Anlasser für den Motor verwendet werden. Ziel des gezeigten Hybridantriebs ist die Optimierung des Energieverbrauchs durch eine Kombination von Verbrennungsmotor und Elektromotor.

Aus der DE 199 16 489 A1 ist Hybridantrieb für Kraftfahrzeuge bekannt. Hier sind mindestens zwei elektrische Maschinen mit einem dazwischen liegenden Leistungsverzweigungsgetriebe angeordnet. Die erste elektrische Maschine ist über das Leistungsverzweigungsgetriebe mit einer ersten Antriebswelle verbindbar; eine weitere elektrische Maschine ist mit einer Abtriebswelle antriebsmäßig verbindbar. Die Elemente sind in einem Gehäuse zu einer Baueinheit zusammengefaßt.

Es ist Aufgabe der vorliegenden Erfindung, eine Antriebseinheit der eingangs genannten Art für ein mehrachsgetriebenes Kraftfahrzeug vorzuschlagen, welches eine größere konstruktive und funktionale Freiheit bei der Anpassung der Drehmomentverteilung und/oder der Drehmomentverhältnisse zwischen der ersten und der zweiten Achse des Kraftfahrzeugs ermöglicht.

Zur Lösung der Aufgabe wird eine Antriebseinheit, insbesondere für ein mehrachsgetriebenes Kraftfahrzeug, welches eine Primärantriebsquelle zum alleinigen Antrieb einer ersten Antriebsachse - mit konstantem Übersetzungsverhältnis - sowie eine Sekundärantriebsquelle, die zusammen mit der Primärantriebsquelle zum Antrieb einer zweiten Antriebsachse - mit variablem Übersetzungsverhältnis - dient, aufweist, vorgeschlagen, welches
ein Überlagerungsgetriebe, das eine erste Eingangswelle zum antriebsmäßigen Verbinden mit einer Primärantriebsquelle, eine zweite Eingangswelle und eine Ausgangswelle aufweist, sowie
einen Elektromotor mit den Teilen Rotor und Stator als Sekundärantriebsquelle, dessen eines Teil (Rotor, Stator) mit der zweiten Eingangswelle des Überlagerungsgetriebes verbunden ist und dessen anderes Teil (Rotor, Stator) mit einem weiteren umlaufenden Glied des Überlagerungsgetriebes verbunden ist,
umfaßt, wobei die zweite Antriebsachse von der Sekundärantriebsquelle zusammen mit der Primärantriebsquelle über das Überlagerungsgetriebe antreibbar ist. Eine derartige Antriebseinheit hat den Vorteil, daß an der Ausgangswelle sowohl das Drehmoment als auch die Drehzahl in einem bestimmten Bereich unabhängig von dem Drehmoment bzw. der Drehzahl an der ersten Eingangswelle, welche mit der Primärantriebsquelle antriebsverbunden ist, regelbar ist. Dadurch, daß die zweite Eingangswelle des Überlagerungsgetriebes mit einem Elektromotor antriebsverbunden ist, der sich innerhalb des Überlagerungsgetriebes im Drehsinn abstützt, kann die Antriebseinheit mit der Sekundärantriebsquelle von der Primärantriebsquelle räumlich getrennt angeordnet werden, wie es beispielsweise bei einem allradgetriebenen Kraftfahrzeug mit an der Hinterachse angeordnetem Verbrennungsmotor als Primärantriebsquelle erforderlich sein kann. Der Elektromotor bietet ferner den Vorteil, daß er verschleißarm, geräusch- und verzögerungsfrei arbeitet sowie stufenlos regelbar ist.

In einer ersten bevorzugten Ausgestaltung ist vorgesehen, daß der Elektromotor sich innerhalb des Überlagerungsgetriebes im Drehsinn so abstützt, daß z.B. der Stator mit der ersten Eingangswelle drehfest verbunden ist und der Rotor mit der zweiten Eingangswelle drehfest verbunden ist. Nach einer anderen günstigen Ausgestaltung ist vorgesehen, daß der Elektromotor im Überlagerungsgetriebe so eingebaut ist, daß der Rotor mit der zweiten Eingangswelle drehfest verbunden ist und der Stator zumindest mittelbar mit der Ausgangswelle drehfest verbunden ist. Auf diese Weise können - wenn die beiden überlagerten Drehzahlen gleich sind, d. h. wenn Rotor und Stator relativ zueinander stillstehen bzw. der Elektromotor als Block umläuft - die erste Antriebsachse und die zweite Antriebsachse mit der gleichen Drehzahl und konstanter Drehmomentverteilung angetrieben werden.

Eine vorteilhafte Ausgestaltung der erfindungsgemäßen Antriebseinheit sieht vor, daß das Überlagerungsgetriebe ein Planetengetriebe mit einer Stegwelle, einem Sonnenrad, zumindest einem Planetenrad und einem Hohlrad ist, wobei die erste Eingangswelle Stegwelle ist und das zumindest eine Planetenrad exzentrisch angeordnet drehbar trägt, die zweite Eingangswelle mit dem Sonnenrad drehfest verbunden ist und das Hohlrad mit der Ausgangswelle drehfest verbunden ist. Dabei ist vorzugsweise vorgesehen, daß die zweite Eingangswelle als Hohlwelle ausgeführt ist sowie weiterhin daß das Sonnenrad und/oder die zweite Eingangswelle auf der ersten Eingangswelle drehbar gelagert sind. Diese Ausgestaltung hat den Vorteil, daß - da der Rotor mit dem Sonnenrad drehfest verbunden ist - der Elektromotor nur ein Stützmoment aufbringen muß, welches wesentlich kleiner ist als das Drehmoment der Ausgangswelle. Daher kann der Elektromotor hinsichtlich des Bauvolumens und des Gewichts entsprechend klein ausgeführt werden.

In einer Konkretisierung der Erfindung ist vorgesehen, daß der Elektromotor ein topfförmiges Gehäuseteil umfaßt, in welchem der Stator angeordnet ist und welches mit der ersten Eingangswelle drehfest verbunden ist.

Die Ausgangswelle und das Hohlrad sind in einer bevorzugten Ausführungsform einstückig ausgeführt und bilden ein Deckelteil. Dabei sind zwischen diesem und dem Gehäuseteil Drehdichtungsmittel vorgesehen, welche verhindern, daß Schmutz in das Überlagerungsgetriebe eindringt bzw. Schmiermittel aus diesem herausgelangt. Das Gehäuseteil ist an seinem deckelseitigen Ende vorzugsweise mit der Stegwelle drehfest verbunden, damit es bei Drehmomentbeaufschlagung sicher abgestützt ist.

In einer anderen Konkretisierung ist vorgesehen, daß der Elektromotor ein topfförmiges Gehäuseteil umfaßt, in welchem der Stator angeordnet ist, das mit der Ausgangswelle drehfest verbunden ist.

Hier kann die Ausgangswelle und/oder das Hohlrad ein Deckelteil bilden, das mit dem topfförmigen Gehäuseteil drehfest und abgedichtet verbunden ist. Das Gehäuseteil kann hierbei eingangswellig drehbar auf der Eingangswelle gelagert sein.

Dabei ist das Gehäuseteil vorzugsweise mit Mitteln zur Stromaufnahme zur Stromversorgung der Ankerwicklungen des Elektromotors versehen, die mit ortsfesten Mitteln zur Stromzuführung zusammenwirken. Die Stromübertragung kann insbesondere berührungslos erfolgen. Es können elektronische Mittel zur bürstenlosen Kommutierung vorgesehen sein. Der Rotor des Elektromotors wird bevorzugt durch Permanentmagnete gebildet.

In weiterer Konkretisierung der Erfindung ist vorgesehen, daß die erste Eingangswelle bzw. die Stegwelle einerseits und das Hohlrad und/oder die Ausgangswelle andererseits drehbar ineinander gelagert sind. Auf diese Weise ist die axiale Baugröße der Antriebseinheit bei günstiger Wellenlagerungslänge minimiert.

Die Lösung der der Erfindung zugrundeliegenden Aufgabe besteht weiterhin in einem mehrachsgetriebenen Kraftfahrzeug mit zumindest einer ersten Antriebsachse und zumindest einer zweiten Antriebsachse, welches
- eine Primärantriebsquelle, welche über einen ersten Antriebsstrang - bevorzugt mit konstanter Übersetzung - mit der ersten Antriebsachse antriebsverbunden ist und welche über einen zweiten Antriebsstrang mit der zweiten Antriebsachse antriebsverbunden ist, sowie
- eine Antriebseinheit, welche im zweiten Antriebsstrang angeordnet ist und die ein Überlagerungsgetriebe mit einer ersten Eingangswelle, einer zweiten Eingangswelle und einer Ausgangswelle sowie einen Elektromotor als Sekundärantriebsquelle aufweist, wobei die erste Eingangswelle mit der Primärantriebsquelle, die zweite Eingangswelle mit dem Elektromotor und die Ausgangswelle mit der zweiten Antriebsachse antriebsverbunden sind, wobei ferner der Elektromotor mit seinen Teilen Rotor und Stator mit jeweils verschiedenen umlaufenden Gliedern des Überlagerungsgetriebes drehfest verbunden ist,
umfaßt. Ein derartiges Kraftfahrzeug hat den Vorteil, daß Verspannungen im zweiten Antriebsstrang, welche von den unterschiedlichen mittleren Bahnradien, die die Räder der ersten Antriebsachse gegenüber den Rädern der zweiten Antriebsachse beim Durchfahren einer Kurve zurücklegen, durch Antreiben des Elektromotors der erfindungsgemäßen Antriebseinheit vermieden werden können. Auf diese Weise werden die Fahrstabilität erhöht und der Reifenverschleiß vermindert.

In einer bevorzugten Ausführungsform ist die erste Antriebsachse Hinterachse des Kraftfahrzeuges, wobei deren Räder ungelenkt sind. Hierbei handelt es sich demnach um ein mit Heckmotor konzipiertes Kraftfahrzeug. Vorzugsweise besteht die Primärantriebsquelle aus Verbrennungsmotor und Getriebe mit veränderlicher Übersetzung, die bei dieser Ausführungsform räumlich der Hinterachse zugeordnet sind.

Alternativ hierzu kann auch vorgesehen sein, daß die erste Antriebsachse Vorderachse ist und deren Räder lenkbar sind. Ein derart gestaltetes Kraftfahrzeug ist für eine Frontmotoranordnung konzipiert. Dabei ist die Primärantriebsquelle, d. h. Verbrennungsmotor und Getriebe mit veränderlicher Übersetzung, räumlich der Vorderachse zugeordnet. Die Antriebseinheit im zweiten Antriebsstrang kann bei einem erfindungsgemäßen Kraftfahrzeug in allen bereits genannten Ausführungsformen verwirklicht werden.

Die Lösung der der Erfindung zugrundeliegenden Aufgabe besteht weiterhin in einem Verfahren zur Antriebsregelung eines erfindungsgemäßen Kraftfahrzeugs, bei dem der Elektromotor in Abhängigkeit von Fahrzustandsgrößen drehzahl- bzw. drehmomentgeregelt wird und/oder in Abhängigkeit von Fahrzustandsgrößen alternativ bestromt oder elektrisch freigeschaltet wird. Dabei wird die zweite Antriebsachse von der Sekundärantriebsquelle zusammen mit der Primärantriebsquelle über das überlagerungsgetriebe in Abhängigkeit von der Regelung bzw. Bestromung des Elektromotors angetrieben.

Um zu gewährleisten, daß die erste Eingangswelle und die Ausgangswelle der Antriebseinheit und damit die erste Antriebsachse und die zweite Antriebsachse mit gleicher Drehzahl und konstanter Drehmomentverteilung angetrieben werden, ist vorgesehen, daß der Elektromotor bei ungebremster Geradeausfahrt des Kraftfahrzeuges so bestromt wird, daß Rotor und Stator relativ zueinander stillstehen oder mit einer festen Relativdrehzahl angetrieben werden. Der Elektromotor muß bei ungebremstem Betrieb des Kraftfahrzeuges ein Haltemoment zwischen der ersten Eingangswelle und der zweiten Eingangswelle erzeugen, welches kleiner ist, als das Antriebsmoment der ersten Eingangswelle.

Es ist ferner vorgesehen, daß durch Antreiben des Elektromotors die Drehgeschwindigkeit der Ausgangswelle bei Kurvenfahrt so geregelt wird, daß die Räder der zweiten Antriebsachse schlupffrei abrollen. Dabei wird die die Drehgeschwindigkeit der zweiten Antriebsachse bei Kurvenfahrt des Kraftfahrzeuges durch Antreiben des Elektromotors vorzugsweise in Abhängigkeit vom Lenkwinkel einer lenkbaren Achse des Kraftfahrzeugs, welche die erste oder die zweite Antriebsachse sein kann, geregelt.

Nach einer bevorzugten Ausführung wird das Drehmoment der zweiten Antriebsachse zum schlupffreien Antrieb durch Bestromen des Elektromotors abhängig von den Drehzahlen der ersten Antriebsachse und der zweiten Antriebsachse geregelt. Beim Durchdrehen eines oder mehrerer Räder des Kraftfahrzeuges aufgrund unterschiedlicher Bodenhaftung ergibt sich eine Drehzahldifferenz zwischen der ersten Eingangswelle und der Ausgangswelle, welche durch Änderung des Drehmoments des Elektromotors herabgesetzt und bestenfalls ausgeglichen werden kann.

Im übrigen kann der Rotor relativ zum Stator des Elektromotors in beiden Drehrichtungen angetrieben und ebenso in beiden Drehrichtungen abgebremst werden. Der Elektromotor kann somit in allen vier Quadranten seines Kennfeldes gefahren werden.

Wenn das Kraftfahrzeug ein Regelsystem zur Regelung der Fahrdynamik, insbesondere ein elektronisches Stabilitätsprogramm (ESP) umfaßt, ist in einer Weiterbildung des Verfahrens vorgesehen, daß der Elektromotor bei Aktivieren des Regelsystems ausgeschaltet wird und der Rotor und der Stator sich relativ zueinander weitgehend frei drehen können. Auf diese Weise wird sichergestellt, daß die Antriebseinheit mit dem Elektromotor Eingriffen in die Fahrdynamik des Kraftfahrzeuges nicht entgegenwirkt. Es ist jedoch auch möglich, gerade im Fall der Aktivierung des elektronischen Stabilitätsprogrammes (ESP) den Elektromotor zu aktivieren, wobei seine Regelung in den Gesamtregelkreis einbezogen werden muß, der dadurch eine zusätzliche Stellgröße erhält.

Wenn das Kraftfahrzeug mit einer Bremsanlage mit ABS-System ausgestattet ist, wird in einer Ausgestaltung des Verfahrens durch das Freischalten des Elektromotors beim Bremsen verhindert, daß eine momentschlüssige Verbindung zwischen der ersten Antriebsachse und der zweiten Antriebsachse zu einem Überbremsen und Blockieren der Räder einer der beiden Achsen führt, wodurch die Fahrstabilität des Kraftfahrzeuges gefährdet werden würde. Auch hier ist jedoch eine aktive Regelung des Elektromotors innerhalb des ABS-Regelkreises möglich.

In einer bevorzugten Ausführungsform des erfindungsgemäßen Verfahrens wird der Elektromotor von einem Bordnetz des Kraftfahrzeuges mit 42 Volt Ausgangsspannung mit elektrischem Strom versorgt.

Ein bevorzugtes Ausführungsbeispiel wird anhand der nachstehenden Zeichnung erläutert. Hierin zeigt
- Fig. 1: ein Antriebsschema eines Kraftfahrzeugs mit einer erfindungsgemäßen Antriebseinheit;
- Fig. 2: die Antriebseinheit gemäß Figur 1 als Einzelheit im Längsschnitt:
- Fig. 3: eine Antriebseinheit ähnlich Figur 1 als Einzelheit im Längsschnitt;
- Fig. 4: eine Antriebseinheit mit Gehäuse in abgewandelter Ausführung im Längsschnitt.

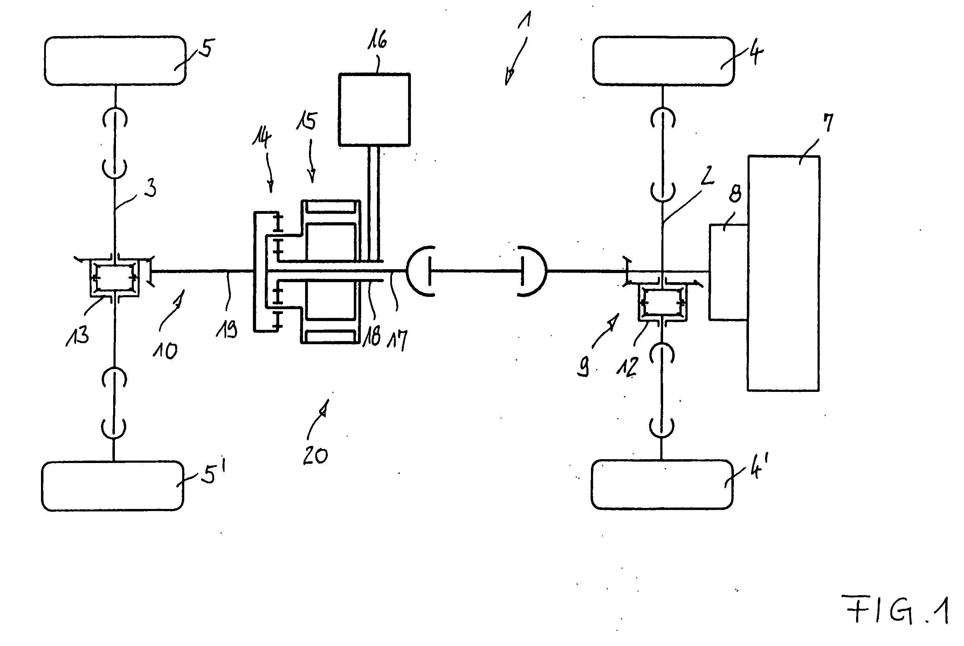

Figur 1 zeigt das Antriebsschema eines Kraftfahrzeugs 1 mit einer angetriebenen ersten Achse 2, welche die Hinterachse bildet, und einer angetriebenen zweiten Achse 3, welche die Vorderachse bildet. Dabei sind die Räder 4 und 4' der ersten Achse 2 ungelenkt, wohingegen die Räder 5 und 5' der zweiten Achse 2 lenkbar sind. Am Heck des Kraftfahrzeuges 1 befindet sich ein Motor 7, welcher über eine nicht dargestellte Kupplung mit einem Stufengetriebe 8 antriebsverbunden ist.

Das Stufengetriebe 8 treibt einen ersten Antriebsstrang 9, welcher die erste Achse 2 mit einem ersten Achsdifferential 12 umfaßt, mit konstantem Übertragungsverhältnis an. Des weiteren treibt das Stufengetriebe 8 einen zweiten Antriebsstrang 10, welcher die zweite Achse 3, ein zweites Achsdifferential 13 sowie eine erfindungsgemäße Antriebseinheit 20 umfaßt, mit stufenlos veränderlichem Übertragungsverhältnis an. Die Antriebseinheit 1 weist ein Planetengetriebe 14 sowie einen Elektromotor 15, welcher in Form eines Drehmomentmotors ("Torquemotors") ausgelegt ist, auf. Hierbei handelt es sich dabei um einen Gleichstrom-Servomotor, welcher darauf abgestimmt ist, ein maximales Drehmoment im Stillstand zu erzeugen. Der Elektromotor 15 wird von einer dem Kraftfahrzeug zugeordneten Spannungsquelle 16 mit elektrischem Strom versorgt.

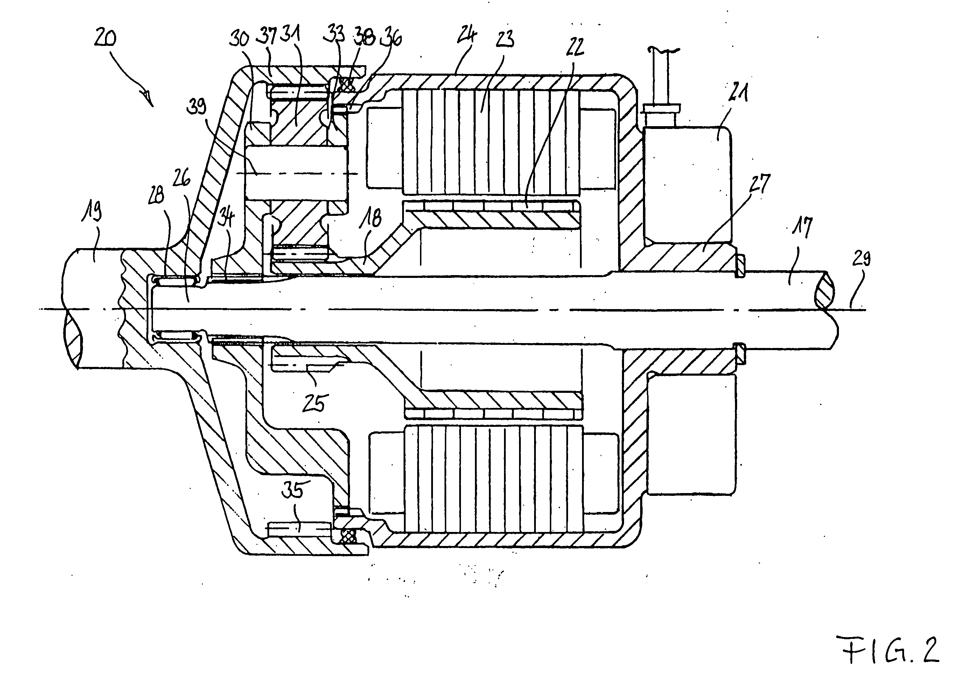

Die erfindungsgemäße Antriebseinheit 20 weist in der Ausführung nach den Figuren 1 und 2 eine erste Eingangswelle 17, welche mit dem Stufengetriebe 8 antriebsverbunden ist, eine zweite Eingangswelle 18, die vom Elektromotor 15 antreibbar ist, sowie eine Ausgangswelle 19 auf, welche das zweite Achsdifferential 12 und damit die zweite Achse 3 antreibt. Der Elektromotor 15 umfaßt einen Rotor 22, welcher mit der zweiten Eingangswelle 18 direkt verbunden ist, sowie einen Stator 23, welcher in ein mit der ersten Eingangswelle 17 drehfest verbundenes topfförmiges Gehäuseteil 24 eingesetzt ist. Dabei wird der Elektromotor über Mittel zur Stromaufnahme 27, welche an einem zylindrischen Ende des Gehäuseteils 24 angebracht sind, über ortsfeste Mittel zur Stromversorgung 21 von der Spannungsquelle 16 des Kraftfahrzeuges - insbesondere berührungslos - mit elektrischem Strom versorgt.

Die zweite Eingangswelle 18 ist als Hohlwelle ausgebildet und auf der ersten Eingangswelle 17 drehbar gelagert. An ihrem der Ausgangswelle 19 zugewandten Ende ist ein Sonnenrad 25 angebracht, welches Teil des Planetengetriebes 14 ist. Die erste Eingangswelle 17 hat einen Zapfen 26, welcher in einer Lagerbohrung 28 der Ausgangswelle 19 gelagert ist. Mit der ersten Eingangswelle 17 ist ein Steg 30 mittels Verzahnungsmitteln 34 drehfest verbunden, auf dem ein Planetenrad 31 um eine exzentrisch zur Längsachse 29 angeordnete Drehachse 39 drehbar gelagert ist. Dabei können neben diesem im Längsschnitt sichtbaren Planetenrad 31 weitere in anderen Schnittebenen vorgesehen sein. An dem Steg 30 ist ein radialer Arm 33 drehfest angebracht, wobei das Planetenrad 31 axial zwischen dem Steg 30 und dem radialen Arm 33 angeordnet ist. Der Arm 33 ist an seinem radial äußeren Ende durch Verzahnungsmittel 36 drehfest mit dem Gehäuseteil 24 verbunden.

Die Ausgangswelle 19 weist ein Hohlrad 35 auf, welches Teil des Planetengetriebes 14 ist. Dabei sind Ausgangswelle 19 und Hohlrad 35 einstückig ausgeführt und bilden ein Deckelteil 37. Zwischen der Innenfläche des Deckelteils 37 und der Außenfläche des Gehäuseteils 24 sind Drehdichtungsmittel 38 vorgesehen.

Das Planetenrad 31 kämmt radial außen mit dem Hohlrad 35 und radial innen mit dem Sonnenrad 25.

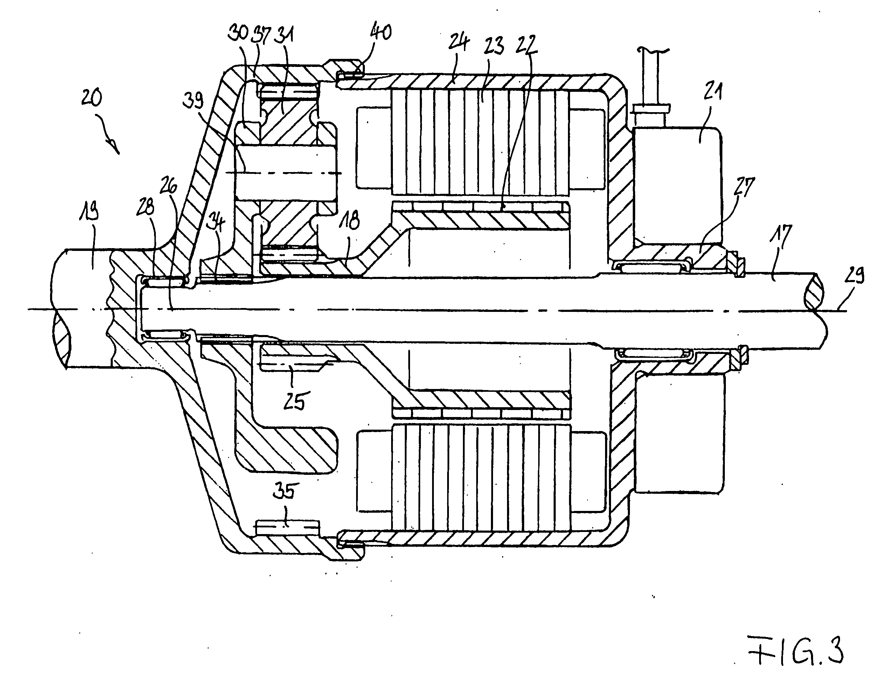

Die erfindungsgemäße Antriebseinheit 20 weist in der Ausführung nach Figur 3 eine erste Eingangswelle 17, welche mit dem Stufengetriebe 8 antriebsverbunden ist, eine zweite Eingangswelle 18, die vom Elektromotor 15 antreibbar ist, sowie eine Ausgangswelle 19 auf, welche das zweite Achsdifferential 13 und damit die zweite Achse 3 antreibt. Der Elektromotor 15 umfaßt einen Rotor 22, welcher mit der zweiten Eingangswelle 18 direkt verbunden ist, sowie einen Stator 23, welcher in ein mit der Ausgangswelle 19 drehfest verbundenes topfförmiges Gehäuseteil 24 eingesetzt ist. Dabei wird der Elektromotor über Mittel zur Stromaufnahme 27, welche an einem zylindrischen Ende des Gehäuseteils 24 angebracht sind, über ortsfeste Mittel zur Stromversorgung 21 von der Spannungsquelle 16 des Kraftfahrzeuges - insbesondere berührungslos - mit elektrischem Strom versorgt.

Die zweite Eingangswelle 18 ist als Hohlwelle ausgebildet und auf der ersten Eingangswelle 17 drehbar gelagert. An ihrem der Ausgangswelle 19 zugewandten Ende ist ein Sonnenrad 25 angebracht, welches Teil des Planetengetriebes 14 ist. Die erste Eingangswelle 17 hat einen Zapfen 26, welcher in einer Lagerbohrung 28 der Ausgangswelle 19 gelagert ist. Mit der ersten Eingangswelle 17 ist ein Steg 30 mittels Verzahnungsmitteln 34 drehfest verbunden, auf dem ein Planetenrad 31 um eine exzentrisch zur Längsachse 29 angeordnete Drehachse 39 drehbar gelagert ist. Dabei können neben diesem im Längsschnitt sichtbaren Planetenrad 31 weitere in anderen Schnittebenen vorgesehen sein.

Die Ausgangswelle 19 weist ein Hohlrad 35 auf, welches Teil des Planetengetriebes 14 ist. Dabei sind Ausgangswelle 19 und Hohlrad 35 einstückig ausgeführt und bilden ein Deckelteil 37. Zwischen der Innenfläche des Deckelteils 37 und der Außenfläche des Gehäuseteils 24 sind Verzahnungsmittel 40 vorgesehen. Diese schaffen eine drehfeste Verbindung zwischen dem Gehäuseteil 24 mit eingesetztem Stator 23 und dem Deckelteil 37 mit der Ausgangswelle 19.

Das Planetenrad 31 kämmt radial außen mit dem Hohlrad 35 und radial innen mit dem Sonnenrad 25.

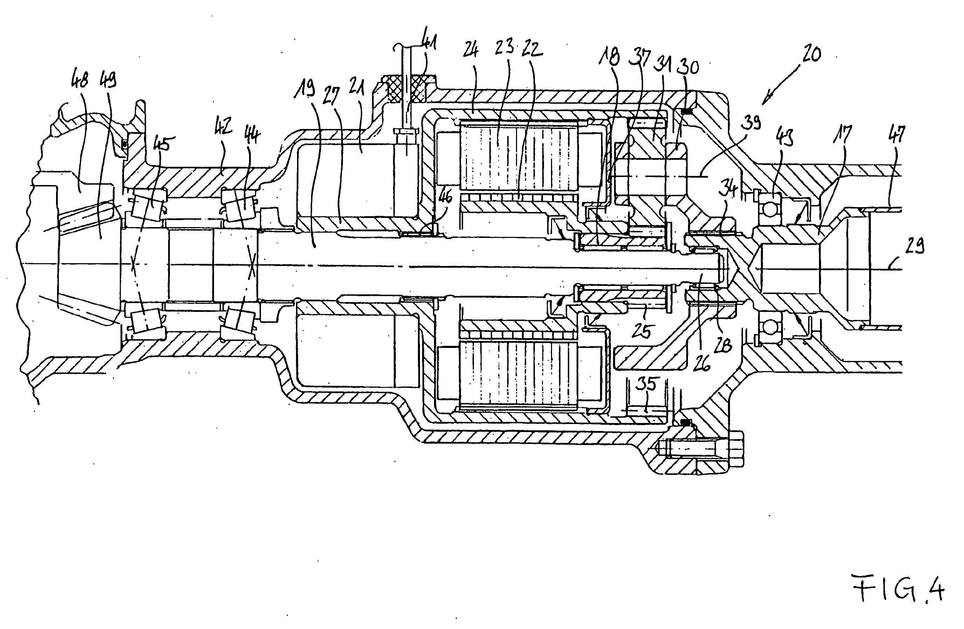

Die erfindungsgemäße Antriebseinheit 20 ist in der Ausführung nach Figur 4 in einem Transaxlegehäuse 42 drehbar gelagert. Hierbei stützen ein Kugellager 43 eine erste Eingangswelle 17 und zwei Schrägrollenlager 44, 45 eine Ausgangswelle 19 ab. Die Eingangswelle 17 ist mit einer Längswelle 47 verschweißt. An der Ausgangswelle 19 befindet sich ein Ritzel 49, das mit einem Tellerrad 48 kämmt. Die erste Eingangswelle 17 ist über die Längswelle 47 mit dem Stufengetriebe 8 antriebsverbunden, die zweite Eingangswelle 18 ist vom Elektromotor 15 antreibbar, die Ausgangswelle 19 treibt das zweite Achsdifferential 13 und damit die zweite Achse 3 an. Der Elektromotor 15 umfaßt einen Rotor 22, welcher mit der zweiten Eingangswelle 18 verbunden ist, sowie einen Stator 23, welcher in ein mit der Ausgangswelle 19 über Verzahnungsmittel 46 drehfest verbundenes topfförmiges Gehäuseteil 24 eingesetzt ist. In das Gehäuseteil 24 ist ein Deckelteil 37 aus Blech eingesetzt, das mit diesem umläuft. Dabei wird der Elektromotor über Mittel zur Stromaufnahme 27, welche an einem zylindrischen Ende des Gehäuseteils 24 angebracht sind, über ortsfeste Mittel zur Stormversorgung 21 von der Spannungsquelle 16 des Kraftfahrzeuges - insbesondere berührungslos - mit elektrischem Strom versorgt. Ein Leistungskabel 41 führt ins Innere des Gehäuses 42.

Die zweite Eingangswelle 18 ist als Hohlwelle ausgebildet und auf der Ausgangswelle 19 drehbar gelagert. An ihrem der Eingangswelle 17 zugewandten Ende ist ein Sonnenrad 25 angebracht, welches Teil des Planetengetriebes 14 ist. Die erste Ausgangswelle 19 hat einen Zapfen 26, welcher in einer Lagerbohrung 28 der Eingangswelle 17 gelagert ist. Mit der ersten Eingangswelle 17 ist ein Steg 30 mittels Verzahnungsmitteln 34 drehfest verbunden, auf dem ein Planetenrad 31 um eine exzentrisch zur Längsachse 29 angeordnete Drehachse 39 drehbar gelagert ist. Dabei können neben diesem im Längsschnitt sichtbaren Planetenrad 31 weitere in Schnittebenen vorgesehen sein.

Die Ausgangswelle 19 weist ein Hohlrad 35 auf, welches Teil des Planetengetriebes 14 ist. Das Planetenrad 31 kämmt radial außen mit dem Hohlrad 35 und radial innen mit dem Sonnenrad 25.

Im normalen Fahrzustand bewegt sich das Kraftfahrzeug 1 geradeaus, wobei kein Radschlupf an den Rädern 4, 4', 5, 5' auftritt. Die Ausgangswelle des Stufengetriebes 8 dreht sich und treibt die erste Achse 2 sowie das Überlagerungsgetriebe 14 über eine Eingangswelle 1.7 an. Gleichzeitig erzeugt der Elektromotor 15 ein Bremsmoment, welches verhindert, daß Rotor 22 und Stator 23 relativ zueinander drehen. Dies bewirkt, daß die erste Eingangswelle 17, die zweite Eingangswelle 18 und die Ausgangswelle 19 mit der gleichen Drehzahl um die Längsachse 29 drehen. Dabei führt das Planetenrad 31 keine Drehbewegung um die eigene Drehachse 39 aus, sondern dreht mit der ersten Eingangswelle 17, der zweiten Eingangswelle 18 und der Ausgangswelle 19 relativ zu diesen stillstehend um die Längsachse 29. Vom Planetenrad 31 wird das Drehmoment über das Hohlrad 35 auf die Ausgangswelle 19 übertragen. Auf diese Weise wird erreicht, daß Drehmoment und Drehzahl der ersten Eingangswelle 17 mit dem Übersetzungsverhältnis 1:1 auf die Ausgangswelle 19 übertragen werden. Somit wird die zweite Achse 3 mit der gleichen Drehzahl und dem gleichen Drehmoment angetrieben wie die erste Achse 2, wodurch der Allradantrieb realisiert ist.

Dadurch, daß der Rotor 22 des Elektromotors mit der zweiten Eingangswelle 18 antriebsverbunden ist und somit das Drehmoment am Sonnenrad 25 eingeleitet wird und ferner der Stator 23 im Gehäuseteil 24 eingesetzt ist, das etwa durchmessergleich mit dem Hohlrad 35 ist, ist das Stützmoment, das der Elektromagnet 15 aufbringen muß, um das volle Antriebsmoment der ersten Eingangswelle 17 auf die Ausgangswelle 19 zu übertragen, wesentlich geringer als das Abtriebsmoment.

Bei Kurvenfahrt beschreiben die vorderen Räder 5, 5' der gelenkten zweiten Achse 3 einen größeren Kreisbogen um den Momentanpol des Kraftfahrzeuges 1 als die hinteren Räder 4, 4' der ersten Achse 2, welche mit konstantem Übersetzungsverhältnis vom Stufengetriebe 8 angetrieben werden. Aus diesem Grunde müssen sich die vorderen Räder 5, 5' schneller drehen als die hinteren Räder 4, 4', damit keine Verspannungen im Antriebsstrang auftreten und die Räder schlupffrei antreiben. Hierfür regelt ein nicht näher dargestellter Regler, welcher beispielsweise Teil eines Regelsystems zur Regelung der Fahrdynamik des Kraftfahrzeuges 1 ist, das vom Elektromotor 15 erzeugte Dreh- bzw. Bremsmoment. Ein entsprechend erhöhtes Drehmoment des Elektromotors 15 führt dazu, daß die Drehzahl des Sonnenrades 25 im erforderlichen Maß gegenüber der Drehzahl der ersten Eingangswelle 17 absinkt. Dadurch dreht das Hohlrad 35 schneller und die Drehzahl der vorderen Räder 5, 5' steigt auf ein Maß, bei dem sie schlupffrei antreiben.

Bei einem Kraftfahrzeug nach einer alternativen Ausführungsform, bei dem das Schaltgetriebe die vorderen Räder mit konstantem Übersetzungsverhältnis und die hinteren Räder mit variablem Übersetzungsverhältnis antreibt, ist die Funktionsweise umgekehrt. In diesem Fall muß die Drehzahl der hinteren Räder geregelt werden, welche bei Kurvenfahrt langsamer drehen müssen als die vorderen Räder, um den unterschiedlichen Radien der Bahnkurven Rechnung zu tragen. Ein entsprechend verringertes Drehmoment des Elektromotors führt dazu, daß die Drehzahl des Sonnenrades im erforderlichen Maß gegenüber der Drehzahl der ersten Eingangswelle steigt. Dadurch dreht das Hohlrad langsamer und die Drehzahl der hinteren Räder sinkt auf ein Maß, bei dem sie schlupffrei antreiben.

Bei Durchdrehen eines oder beider der vorderen Räder 5, 5' der gelenkten zweiten Achse 3, beispielsweise aufgrund unterschiedlicher Reibungsverhältnisse zur Fahrbahn, muß die Drehzahl der zweiten Achse 3 gegenüber der der ersten Achse 2 gesenkt und ein höheres Drehmoment auf die erste Achse 2 übertragen werden. Hierfür wird das vom Elektromotor 15 erzeugte Drehmoment entsprechend der Drehzahldifferenz zwischen erster Eingangswelle 17 und Ausgangswelle 19 verringert, so daß das Sonnenrad 18 schneller dreht als die erste Eingangswelle 17. Dadurch dreht das Hohlrad 35 langsamer und die Drehzahl der vorderen Räder 5, 5' sinkt auf ein Maß, bei dem sie schlupffrei antreiben.

Bei einem Kraftfahrzeug 1, welches ein Regelsystem zur Regelung der Fahrdynamik, insbesondere ein elektronisches Stabilitätsprogramm (ESP) umfaßt, ist vorgesehen, daß der Elektromotor 15 bei Aktivieren des Regelsystems ausgeschaltet wird und der Rotor 22 und der Stator 23 sich relativ zueinander frei drehen können. Auf diese Weise wird sichergestellt, daß das Überlagerungsgetriebe 14 Eingriffen in die Fahrdynamik des Kraftfahrzeuges 1 nicht entgegenwirkt. Weiterhin wird durch das Freigeben des Elektromotors 15 beim Bremsen verhindert, daß die momentschlüssige Verbindung zwischen der ersten Achse 2 und der zweiten Achse 3 zu einem Überbremsen und Blockieren der Räder 4, 4', 5, 5' einer der beiden Achsen 2, 3 führt, wodurch die Fahrstabilität des Kraftfahrzeuges 1 gefährdet werden würde.

### Bezugszeichenliste

- 1: Kraftfahrzeug
- 2: erste Achse
- 3: zweite Achse
- 4, 4': Rad
- 5, 5': Rad
- 7: Motor
- 8: Schaltgetriebe
- 9: erster Antriebsstrang
- 10: zweiter Antriebsstrang
- 12: erstes Achsdifferential
- 13: zweites Achsdifferential
- 14: Überlagerungsgetriebe / Planetengetriebe
- 15: Elektromotor / Torquemotor
- 16: Spannungsquelle / Bordnetz
- 17: erste Eingangswelle
- 18: zweite Eingangswelle
- 19: Ausgangswelle
- 20: Antriebseinheit
- 21: Stromzuführungsmittel
- 22: Rotor
- 23: Stator
- 24: Gehäuseteil
- 25: Sonnenrad
- 26: Zapfen
- 27: Stromabnahmemittel
- 28: Bohrung
- 29: Längsachse
- 30: Steg
- 31: Planetenrad
- 33: Arm
- 34: Verzahnungsmittel
- 35: Hohlrad
- 36: Verzahnungsmittel
- 37: Deckelteil
- 38: Dichtungsmittel
- 39: Drehachse
- 40: Verzahnungsmittel
- 41: Leistungskabel
- 42: Transaxlegehäuse
- 43: Kugellager
- 44: Schrägrollenlager
- 45: Schrägrollenlager
- 46: Verzahnungsmittel
- 47: Längswelle
- 48: Tellerrad
- 49: Ritzel

## Patentansprüche

1. Antriebseinheit (20) für ein mehrachsgetriebenes Kraftfahrzeug (1), welches eine Primärantriebsquelle zum alleinigen Antrieb einer ersten Antriebsachse (2) sowie eine Sekundärantriebsquelle, die zusammen mit der Primärantriebsquelle dem Antrieb einer zweiten Antriebsachse (3) dient, aufweist, umfassend
ein Überlagerungsgetriebe (14), welches eine erste Eingangswelle (17) zum antriebsmäßigen Verbinden mit der Primärantriebsquelle, eine zweite Eingangswelle (18) und eine Ausgangswelle (19) aufweist, sowie
einen Elektromotor (15) mit den Teilen Rotor (22) und Stator (23) als Sekundärantriebsquelle, dessen eines Teil (Rotor, Stator) mit der zweiten Eingangswelle (18) des Überlagerungsgetriebes (14) verbunden ist und dessen anderes Teil (Rotor, Stator) mit einem weiteren umlaufenden Glied des Überlagerungsgetriebes (14) verbunden ist,
wobei die zweite Antriebsachse (3) von der Sekundärantriebsquelle zusammen mit der Primärantriebsquelle über das Überlagerungsgetriebe (14) antreibbar ist.

2. Antriebseinheit nach Anspruch 1,
**dadurch gekennzeichnet,**
**daß** der Rotor (22) mit der zweiten Eingangswelle (18) drehfest verbunden ist und der Stator (23) zumindest mittelbar mit der ersten Eingangswelle (17) drehfest verbunden ist.

3. Antriebseinheit nach Anspruch 1,
**dadurch gekennzeichnet,**
**daß** der Rotor (22) mit der zweiten Eingangswelle (18) drehfest verbunden ist und der Stator (23) zumindest mittelbar mit der Ausgangswelle (19) drehfest verbunden ist.

4. Antriebseinheit nach einem der Ansprüche 1 bis 3,
**dadurch gekennzeichnet,**
**daß** das Überlagerungsgetriebe (14) ein Planetengetriebe mit einer Stegwelle, einem Sonnenrad (25), zumindest einem Planetenrad (31) und einem Hohlrad (35) ist, wobei
- die erste Eingangswelle (17) Stegwelle ist und das zumindest eine Planetenrad (31) exzentrisch angeordnet drehbar trägt,
- die zweite Eingangswelle (18) mit dem Sonnenrad (25) drehfest verbunden ist und
- das Hohlrad (35) mit der Ausgangswelle (19) drehfest verbunden ist.

5. Antriebseinheit nach Anspruch 4,
**dadurch gekennzeichnet,**
**daß** die zweite Eingangswelle (18) als Hohlwelle ausgeführt ist.

6. Antriebseinheit nach einem der Ansprüche 4 oder 5,
**dadurch gekennzeichnet,**
**daß** das Sonnenrad (25) und/oder die zweite Eingangswelle (18) auf der ersten Eingangswelle (17) drehbar gelagert sind.

7. Antriebseinheit nach einem der Ansprüche 4 bis 6,
**dadurch gekennzeichnet,**
**daß** die erste Eingangswelle (17) einerseits und das Hohlrad (35) und/oder die Ausgangswelle (19) andererseits unmittelbar drehbar ineinander gelagert sind.

8. Antriebseinheit nach einem der Ansprüche 1 bis 7,
**dadurch gekennzeichnet,**
**daß** ein topfförmiges Gehäuseteil (24) des Elektromotors (15), in welchem der Stator (23) angeordnet ist, mit der ersten Eingangswelle (17) drehfest verbunden ist.

9. Antriebseinheit nach Anspruch 8,
**dadurch gekennzeichnet,**
**daß** die Ausgangswelle (19) und/oder das Hohlrad (35) ein Deckelteil (37) bilden, wobei zwischen diesem und dem Gehäuseteil (24) Drehdichtungsmittel (38) vorgesehen sind.

10. Antriebseinheit nach einem der Ansprüche 8 oder 9,
**dadurch gekennzeichnet,**
**daß** das Gehäuseteil (24) an seinem deckelseitigen Ende mit der Stegwelle (30) drehfest verbunden ist.

11. Antriebseinheit nach einem der Ansprüche 1 bis 7,
**dadurch gekennzeichnet,**
**daß** ein topfförmiges Gehäuseteil (24) des Elektromotors (15), in welchem der Stator angeordnet ist, mit der Ausgangswelle (19) drehfest verbunden ist.

12. Antriebseinheit nach Anspruch 11,
**dadurch gekennzeichnet,**
**daß** die Ausgangswelle (19) und/oder das Hohlrad (35) ein Deckelteil bilden, wobei zwischen diesem und dem Gehäuseteil (24) drehfeste Verbindungsmittel (40) wirksam sind.

13. Antriebseinheit nach einem der Ansprüche 11 oder 12,
**dadurch gekennzeichnet,**
**daß** das Gehäuseteil (24) drehbar auf der Eingangswelle (17) gelagert ist.

14. Antriebseinheit nach einem der Ansprüche 1 bis 13,
**dadurch gekennzeichnet,**
**daß** das Gehäuseteil (24) des Elektromotors (15) mit Mitteln zu Stromannahme versehen ist, die mit ortsfesten Mitteln (21) zur Stromzuführung zusammenwirken.

15. Antriebseinheit nach einem der Ansprüche 1 bis 14,
**dadurch gekennzeichnet,**
**daß** der Rotor (22) des Elektromotors (15) durch Permanentmagnete gebildet wird.

16. Mehrfachsgetriebenes Kraftfahrzeug (1) mit zumindest einer ersten Antriebsachse (2) und zumindest einer zweiten Antriebsachse (3) umfassend
- eine Primärantriebsquelle, welche über einen ersten Antriebsstrang (9) mit der ersten Antriebsachse (2) antriebsverbunden ist und welche über einen zweiten Antriebsstrang (10) mit der zweiten Antriebsachse (3) antriebsverbunden ist,
- eine Antriebseinheit (20), welche im zweiten Antriebsstrang (10) angeordnet ist und die ein Überlagerungsgetriebe (14) mit einer ersten Eingangswelle (17), einer zweiten Eingangswelle (18) und einer Ausgangswelle (19) sowie einen Elektromotor (15) als Sekundärantriebsquelle aufweist, wobei die erste Eingangswelle (17) mit der Primärantriebsquelle, die zweite Eingangswelle (18) mit dem Elektromotor (15) und die Ausgangswelle (19) mit der zweiten Achse (3) antriebsverbunden sind, wobei ferner der Elektromotor (15) mit seinen Teilen Rotor und Stator jeweils mit verschiedenen umlaufenden Gliedern des Überlagerungsgetriebes (14) drehfest verbunden ist.

17. Kraftfahrzeug nach Anspruch 16,
**dadurch gekennzeichnet,**
**daß** die Primärantriebsquelle von einer Einheit aus Verbrennungsmotor und Getriebe mit veränderlicher Übersetzung gebildet wird.

18. Kraftfahrzeug nach einem der Ansprüche 16 oder 17,
**dadurch gekennzeichnet,**
**daß** die erste Antriebsachse (2) Hinterachse ist und deren Räder (4, 4') ungelenkt sind.

19. Kraftfahrzeug nach einem der Ansprüche 16 bis 18,
**dadurch gekennzeichnet,**
**daß** der Verbrennungsmotor (7) und das Getriebe (8) räumlich der Hinterachse zugeordnet sind.

20. Kraftfahrzeug nach einem der Ansprüche 16 bis 19,
**dadurch gekennzeichnet,**
**daß** die erste Antriebsachse (2) ein erstes Achsdifferential (12) und die zweite Antriebsachse (3) ein zweites Achsdifferential (13) aufweist.

21. Kraftfahrzeug nach einem der Ansprüche 16 bis 20,
**dadurch gekennzeichnet,**
**daß** der Elektromotor (15) mit seinen Teilen Rotor (22) und Stator (23) jeweils mit der ersten Eingangswelle (17) und der zweiten Eingangswelle (18) des Überlagerungsgetriebes (14) verbunden ist.

22. Kraftfahrzeug nach einem der Ansprüche 16 bis 20,
**dadurch gekennzeichnet,**
**daß** der Elektromotor mit seinen Teilen Rotor (22) und Stator (23) jeweils mit einer der Eingangswellen (17, 18) und der Ausgangswelle (19) des Überlagerungsgetriebes verbunden ist.

23. Kraftfahrzeug nach einem der Ansprüche 16 bis 22,
**dadurch gekennzeichnet,**
**daß** das Überlagerungsgetriebe (14) ein Planetengetriebe mit einer Stegwelle, einem Sonnenrad (25), zumindest einem Planetenrad (31) und einem Hohlrad (35) ist, wobei
- die erste Eingangswelle (17) Stegwelle ist und das zumindest eine Planetenrad (31) exzentrisch angeordnet drehbar trägt,
- die zweite Eingangswelle (18) mit dem Sonnenrad (25) drehfest verbunden ist und
- das Hohlrad (35) mit der Ausgangswelle (19) drehfest verbunden ist.

24. Kraftfahrzeug nach Anspruch 23,
**dadurch gekennzeichnet,**
**daß** die zweite Eingangswelle (18) als Hohlwelle ausgeführt ist.

25. Kraftfahrzeug nach einem der Ansprüche 23 oder 24,
**dadurch gekennzeichnet,**
**daß** das Sonnenrad (25) und/oder die zweite Eingangswelle (18) auf der ersten Eingangswelle (17) drehbar gelagert sind.

26. Kraftfahrzeug nach einem der Ansprüche 23 bis 25,
**dadurch gekennzeichnet,**
**daß** die erste Eingangswelle (17) einerseits und das Hohlrad (35) und/oder die Ausgangswelle (19) andererseits unmittelbar drehbar ineinander gelagert sind.

27. Kraftfahrzeug nach einem der Ansprüche 16 bis 26,
**dadurch gekennzeichnet,**
**daß** ein topfförmiges Gehäuseteil (24) des Elektromotors (15), in welchem der Stator (23) angeordnet ist, mit der ersten Eingangswelle (17) drehfest verbunden ist.

28. Kraftfahrzeug nach Anspruch 27,
**dadurch gekennzeichnet,**
**daß** die Ausgangswelle (19) und/oder das Hohlrad (35) ein Deckelteil (37) bilden, wobei zwischen diesem und dem Gehäuseteil (24) Drehdichtungsmittel (38) vorgesehen sind.

29. Kraftfahrzeug nach einem der Ansprüche 27 oder 28,
**dadurch gekennzeichnet,**
**daß** das Gehäuseteil (24) an seinem deckelseitigen Ende mit der Stegwelle (30) drehfest verbunden ist.

30. Kraftfahrzeug nach einem der Ansprüche 16 bis 26,
**dadurch gekennzeichnet,**
**daß** ein topfförmiges Gehäuseteil (24) des Elektromotors (15), in welchem der Stator angeordnet ist, mit der Ausgangswelle (19) drehfest verbunden ist.

31. Kraftfahrzeug nach Anspruch 30,
**dadurch gekennzeichnet,**
**daß** die Ausgangswelle (19) und/oder das Hohlrad (35) ein Deckelteil bilden, wobei zwischen diesem und dem Gehäuseteil (24) drehfeste Verbindungsmittel wirksam sind.

32. Kraftfahrzeug nach einem der Ansprüche 30 oder 31,
**dadurch gekennzeichnet,**
**daß** das Gehäuseteil (24) drehbar auf der Eingangswelle (17) gelagert ist.

33. Kraftfahrzeug nach einem der Ansprüche 16 bis 32,
**dadurch gekennzeichnet,**
**daß** das Gehäuseteil (24) des Elektromotors (15) mit Mitteln zur Stromabnahme versehen ist, der mit ortsfesten Mitteln zur Stromzuführung (21) zusammenwirkt.

34. Kraftfahrzeug nach einem der Ansprüche 16 und 33,
**dadurch gekennzeichnet,**
**daß** der Rotor (22) des Elektromotors (15) durch Permanentmagnete gebildet wird.

35. Verfahren zur Antriebsregelung eines mehrachsgetriebenen Kraftfahrzeuges nach einem der Ansprüche 16 bis 34,
**dadurch gekennzeichnet,**
**daß** der Elektromotor (15) in Abhängigkeit von Fahrzustandsgrößen drehzahlgeregelt wird, wobei die zweite Antriebsachse (3) von der Sekundärantriebsquelle zusammen mit der Primärantriebsquelle über das Überlagerungsgetriebe (14) in Abhängigkeit von der Drehzahl des Elektromotors (15) angetrieben wird.

36. Verfahren zur Antriebsregelung eines mehrachsgetriebenen Kraftfahrzeuges nach einem der Ansprüche 16 bis 34,
**dadurch gekennzeichnet,**
**daß** der Elektromotor (15) in Abhängigkeit von Fahrzustandsgrößen bestromt oder elektrisch freigeschaltet wird, wobei die zweite Antriebsachse (3) von der Sekundärantriebsquelle zusammen mit der Primärantriebsquelle über das Überlagerungsgetriebe (14) in Abhängigkeit von der Bestromung des Elektromotors (15) angetrieben wird.

37. Verfahren nach einem der Ansprüche 35 oder 36,
**dadurch gekennzeichnet,**
**daß** der Elektromotor (15) bei ungebremster Geradeausfahrt des Kraftfahrzeuges (1) so bestromt wird, daß sein Rotor (22) und Stator (23) relativ zueinander stillstehen.

38. Verfahren nach einem der Ansprüche 35 bis 37,
**dadurch gekennzeichnet,**
**daß** durch Antreiben des Elektromotors (15) die Drehgeschwindigkeit der Ausgangswelle (19) bei Kurvenfahrt so geregelt wird, daß die Räder (5, 5') der zweiten Antriebsachse (3) schlupffrei abrollen.

39. Verfahren nach einem der Ansprüche 35 bis 38,
**dadurch gekennzeichnet,**
**daß** die Drehgeschwindigkeit der zweiten Antriebsachse (3) durch Antreiben des Elektromotors (15) bei Kurvenfahrt des Kraftfahrzeuges (1) abhängig vom Lenkwinkel einer lenkbaren Achse des Kraftfahrzeugs geregelt wird.

40. Verfahren nach einem der Ansprüche 35 bis 39,
**dadurch gekennzeichnet,**
**daß** das Drehmoment der zweiten Antriebsachse (3) zum schlupffreien Antrieb durch Bestromen des Elektromotors (15) abhängig von den Drehzahlen der ersten Antriebsachse und der zweiten Antriebsachse geregelt wird.

41. Verfahren nach einem der Ansprüche 35 bis 39,
**dadurch gekennzeichnet,**
**daß** der Elektromotor (15) bei Aktivieren eines Fahrdynamik-Regelsystems des Kraftfahrzeugs elektrisch freigeschaltet wird bzw. geregelt/aktiviert wird.

42. Verfahren nach einem der Ansprüche 35 bis 41,
**dadurch gekennzeichnet,**
**daß** der Elektromotor (15) beim Betätigen einer mit ABS-System versehenen Bremsanlage des Kraftfahrzeugs elektrisch freigeschaltet wird bzw. geregelt/aktiviert wird.

## Claims

1. A driving unit (20) for a motor vehicle (1) which is driven by a plurality of axles and which comprises a primary driving source for solely driving a first driving axle (2) as well as a second driving source which, together with the primary driving source, serves to drive a second driving axle (3), said driving unit comprising a superimposed drive (14) which comprises a first input shaft (17) for establishing a driving connection with the primary driving source, a second input shaft (18) and an output shaft (19), as well as an electric motor (15) with the following parts: a rotor (22) and a stator (23) constituting the secondary driving source whose one part (rotor, stator) is connected to the second input shaft (18) of the superimposed drive (14) and whose other part (rotor, stator) is connected to a further rotating member of the superimposed drive (14),
wherein the second driving axle (3) is drivable by the secondary driving source together with the primary driving source via the superimposed drive (14).

2. A driving unit according to claim 1,
**characterised in**
**that** the rotor (22) is connected to the second input shaft (18) in a rotationally fixed way and that the stator (23), at least indirectly, is connected to the first input shaft (17) in a rotationally fixed way.

3. A driving unit according to claim 1,
**characterised in**
**that** the rotor (22) is connected to the second input shaft (18) in a rotationally fixed way and that the stator (23), at least indirectly, is connected to the output shaft (19) in a rotationally fixed way.

4. A driving unit according to any one of claims 1 to 3,
**characterised in**
**that** the superimposed drive (14) is a planetary drive with a web shaft, a sun gear (25), at least one planetary gear (31) and a hollow gear (35), wherein
- the first input shaft (17) is the web shaft and rotatingly carries the at least one planetary gear (31) in an eccentric arrangement;
- the second input shaft (18) is connected to the sun gear (25) in a rotationally fixed way;
- the hollow gear (35) is connected to the output shaft (19) in a rotationally fixed way.

5. A driving unit according to claim 4,
**characterised in**
**that** the second input shaft (18) is provided in the form of a hollow shaft.

6. A driving unit according to any one of claims 4 or 5,
**characterised in**
**that** the sun gear (25) and/or the second input shaft (18) are/is rotatably supported on the first input shaft (17).

7. A driving unit according to any one of claims 4 to 6,
**characterised in**
**that** the first input shaft (17) on the one hand and the hollow gear (35) and/or the output shaft (19) on the other hand are directly rotatably supported inside one another.

8. A driving unit according to any one of claims 1 to 7,
**characterised in**
**that** a cup-shaped housing part (24) of the electric motor (15), in which the stator (23) is arranged, is connected to the first input shaft (17) in a rotationally fixed way.

9. A driving unit according to claim 8,
**characterised in**
**that** the output shaft (19) and/or the hollow gear (35) form/forms a cover part (37) wherein, between the latter and the housing part (24) there are provided rotational sealing means (38).

10. A driving unit according to any one of claims 8 or 9,
**characterised in**
**that**, at its end facing the cover, the housing part (24) is connected to the web shaft (30) in a rotationally fixed way.

11. A driving unit according to any one of claims 1 to 7,
**characterised in**
**that** a cup-shaped housing part (24) of the electric motor (15), in which there is arranged the stator, is connected to the output shaft (19) in a rotationally fixed way.

12. A driving unit according to claim 11,
**characterised in**
**that** the output shaft (19) and/or the hollow gear (35) form/forms a cover part, wherein between the latter and the housing part (24) there are effective rotationally fixed connecting means (40).

13. A driving unit according to any one of claims 11 or 12,
**characterised in**
**that** the housing part (24) is rotatably supported on the input shaft (17).

14. A driving unit according to any one of claims 1 to 13,
**characterised in**
**that** the housing part (24) of the electric motor (15) is provided with power receiving means which cooperate with stationary power supplying means (21).

15. A driving unit according to any one of claims 1 to 14,
**characterised in**
**that** the rotor (22) of the electric motor (15) is formed by permanent magnets.

16. A motor vehicle (1) driven by a plurality of axles, having at least one first driving axle (20) and at least one second driving axle (3), comprising
- a primary driving source which is drivingly connected via a first driveline (9) to the first driving axle (2) and which, via a second driveline (10), is drivingly connected to the second driving axle (3);
- a driving unit (20) which is arranged in the second driveline (10) and which comprises a superimposed drive (14) with a first input shaft (17), a second input shaft (18) and an output shaft (19) as well as an electric motor (15) as a secondary driving source, wherein the first input shaft (17) is drivingly connected to the primary driving source, the second input shaft (18) to the electric motor (15) and the output shaft (19) to the second axle (3), wherein, furthermore, the electric motor (15) with its rotor and stator parts is connected in a rotationally fixed way to different rotating members of the superimposed drive (14).

17. A motor vehicle according to claim 16,
**characterised in**
**that** the primary driving source is formed by a unit consisting of an internal combustion engine and gearbox with a variable transmission ratio.

18. A motor vehicle according to any one of claims 16 or 17,
**characterised in**
**that** the first driving axle (2) is a rear axle and that the wheels (4, 4') of same are unsteered.

19. A motor vehicle according to any one of claims 16 to 18,
**characterised in**
**that** the internal combustion engine (7) and the gearbox (8), in respect of space, are associated with the rear axle.

20. A motor vehicle according to any one of claims 16 to 19,
**characterised in**
**that** the first driving axle (2) comprises a first axle differential (12) and the second driving axle (3) a second axle differential (13).

21. A motor vehicle according to any one of claims 16 to 20,
**characterised in**
**that** the electric motor (15) with its rotor (22) and stator (23) parts is connected to the first input shaft (17) and to the second input shaft (18) of the superimposed drive (14).

22. A motor vehicle according to any one of claims 16 to 20,
**characterised in**
**that** the electric motor its the rotor (22) and stator (23) parts is connected to one of the input shafts (17, 18) and to the output shaft (19) of the superimposed drive (14).

23. A motor vehicle according to any one of claims 16 to 22,
**characterised in**
**that** the superimposed drive (14) is a planetary drive with a web shaft, a sun gear (25), at least one planetary gear (31) and a hollow gear (35), wherein
- the first input shaft (17) is the web shaft and rotatably carries the at least one planetary gear (31) in an eccentric arrangement;
- the second input shaft (18) is connected to the sun gear (25) in a rotationally fixed way and
- the hollow gear (35) is connected to the output shaft (19) in a rotationally fixed way.

24. A motor vehicle according to claim 23,
**characterised in**
**that** the second input shaft (18) is provided in the form of a hollow shaft.

25. A motor vehicle according to any one of claims 23 or 24,
**characterised in**
**that** the sun gear (25) and/or the second input shaft (18) are/is rotatably supported on the first input shaft (17).

26. A motor vehicle according to any one of claims 23 to 25,
**characterised in**
**that** the first input shaft (17) on the one hand and the hollow gear (35) and/or the output shaft (19) on the other hand are directly rotatably supported inside one another.

27. A motor vehicle according to any one of claims 16 to 26,
**characterised in**
**that** a cup-shaped housing part (24) of the electric motor (15), in which the stator (23) is arranged, is connected to the first input shaft (17) in a rotationally fixed way.

28. A motor vehicle according to claim 27,
**characterised in**
**that** the output shaft (19) and/or the hollow gear (35) form/forms a cover part (37), wherein between the latter and the housing part (24), there are provided rotational sealing means (38).

29. A motor vehicle according to any one of claims 27 or 28,
**characterised in**
**that**, at its end facing the cover, the housing part (24) is connected to the web shaft (30) in a rotationally fixed way.

30. A motor vehicle according to any one of claims 16 to 26,
**characterised in**
**that** a cup-shaped housing part (24) of the electric motor, in which there is arranged the stator, is connected to the output shaft (19) in a rotationally fixed way.

31. A motor vehicle according to claim 30,
**characterised in**
**that** the output shaft (19) and/or the hollow gear (35) form a cover part, wherein between the latter and the housing part (24), there are effective rotationally fixed connecting means.

32. A motor vehicle according to any one of claims 30 or 31,
**characterised in**
**that** the housing part (24) is rotatably supported on the input shaft (17).

33. A motor vehicle according to any one of claims 16 to 32,
**characterised in**
**that** the housing part (24) of the electric motor (15) is provided with power receiving means which cooperate with stationary power supplying means (21).

34. A motor vehicle according to any one of claims 16 to 33,
**characterised in**
**that** the rotor (22) of the electric motor (15) is formed by permanent magnets.

35. A method of controlling the drive of a motor vehicle driven by a plurality of axles, according to any one of claims 16 to 34,
**characterised in**
**that** the speed of the electric motor (15) is controlled as a function of driving condition parameters, wherein the second driving axle (3) is driven by the secondary driving source together with the primary driving source via the superimposed drive 14) as a function of the speed of the electric motor 15).

36. A method of controlling the drive of a motor vehicle driven by a plurality of axles, according to any one of claims 16 to 34,
**characterised in**
**that** the electric motor (15) is supplied with power or electrically disconnected as a function of driving condition parameters, wherein the second driving axle (3) is driven by the secondary driving source together with the primary driving source via the superimposed drive (14) as a function of power supply to the electric motor (15).

37. A method according to any one of claims 35 or 36,
**characterised in**
**that** when the vehicle (1) is driven in a straight line without being braked, the electric motor (15) is supplied with power in such a way that its rotor (22) and stator (23) are stationary relative to one another.

38. A method according to any one of claims 35 to 37,
**characterised in**
**that** by driving the electric motor (15), the rotational speed of the output shaft (19) when the vehicle negotiates curves is controlled in such a way that the wheels (5, 5') of the second driving axle (3) roll in a slip-free way.

39. A method according to any one of claims 35 to 38,
**characterised in**
**that** the rotational speed of the second driving axle (3) is controlled by driving the electric motor (15) when the vehicle (1) negotiates curves as a function of the steering angle of a steerable axle of the motor vehicle.

40. A method according to any one of claims 35 to 39,
**characterised in**
**that** the torque of the second driving axle (3) for slip-free driving conditions is controlled by supplying the electric motor (15) as a function of the speeds of the first driving axle and of the second driving axle.

41. A method according to any one of claims 35 to 39,
**characterised in**
**that** when activating a driving dynamic controlling system of the motor vehicle, the electric motor (15) is electrically disconnected and controlled/activated respectively.

42. A method according to any one of claims 35 to 41,
**characterised in**
**that** when activating a motor vehicle brake system provided with an ABS system, the electric motor (15) is electrically disconnected and controlled/activated respectively.

## Revendications

1. Unité d'entraînement (20) pour un véhicule automobile (1) à entraînement sur plusieurs essieux, qui comprend une source d'entraînement primaire entraînant seule un premier essieu moteur (2), ainsi qu'une source d'entraînement secondaire, qui sert à entraîner, en commun avec la source d'entraînement primaire, un deuxième essieu moteur (3), l'unité d'entraînement englobant
une boite de transmission de superposition (14) qui comprend un premier arbre d'entrée (17) pour la liaison de transmission d'entraînement avec la source d'entraînement primaire, un deuxième arbre d'entrée (18) et un arbre de sortie (19), ainsi
qu'un moteur électrique (15) comprenant les parties rotor (22) et stator (23), en guise de source d'entraînement secondaire, dont une partie (rotor, stator) est reliée au deuxième arbre d'entrée (18) de la boite de transmission de superposition (14), et dont l'autre partie (rotor, stator) est reliée à un autre organe en révolution de la boite de transmission de superposition (14),
le deuxième essieu moteur (3) pouvant être entraîné par la source d'entraînement secondaire en commun avec la source d'entraînement primaire, par l'intermédiaire de la boite de transmission de superposition (14).

2. Unité d'entraînement selon la revendication 1,
**caractérisée en ce que** le rotor (22) est lié par une liaison fixe de rotation avec le deuxième arbre d'entrée (18), et le stator (23) est lié par une liaison fixe de rotation, au moins indirectement, avec le premier arbre d'entrée (17).

3. Unité d'entraînement selon la revendication 1,
**caractérisée en ce que** le rotor (22) est lié par une liaison fixe de rotation avec le deuxième arbre d'entrée (18), et le stator (23) est lié par une liaison fixe de rotation, au moins indirectement, avec l'arbre de sortie (19).

4. Unité d'entraînement selon l'une des revendications 1 à 3,
**caractérisée en ce que** la boite de transmission de superposition (14) est un train épicycloïdal comprenant un arbre à plateau, une roue centrale ou planétaire (25), au moins un satellite (31) et une couronne (35), boite dans laquelle
- le premier arbre d'entrée (17) est l'arbre à plateau et porte de manière rotative ledit au moins un satellite (31) selon un agencement excentré,
- le deuxième arbre d'entrée (18) est lié par une liaison fixe de rotation avec la roue planétaire (25), et
- la couronne (35) est liée par une liaison fixe de rotation avec l'arbre de sortie (19).

5. Unité d'entraînement selon la revendication 4,
**caractérisée en ce que** le deuxième arbre d'entrée (18) est réalisé sous forme d'arbre creux.

6. Unité d'entraînement selon l'une des revendications 4 ou 5,
**caractérisée en ce que** la roue planétaire (25) et/ou le deuxième arbre d'entrée (18) sont montés rotatifs sur le premier arbre d'entrée (17).

7. Unité d'entraînement selon l'une des revendications 4 à 6,
**caractérisée en ce que** le premier arbre d'entrée (17) d'une part et la couronne (35) et/ou l'arbre de sortie (19) d'autre part sont montés rotatifs directement l'un dans l'autre.

8. Unité d'entraînement selon l'une des revendications 1 à 7,
**caractérisée en ce qu'**une pièce de carter (24) en forme de cloche du moteur électrique (15), dans laquelle est agencé le stator (23), est liée par une liaison fixe de rotation avec le premier arbre d'entrée (17).

9. Unité d'entraînement selon la revendication 8,
**caractérisée en ce que** l'arbre de sortie (19) et/ou la couronne (35) forment une partie de couvercle (37) entre laquelle et la pièce de carter (24) sont prévus des moyens d'étanchéité à la rotation (38).

10. Unité d'entraînement selon l'une des revendications 8 ou 9,
**caractérisée en ce que** la pièce de carter (24), à son extrémité côté couvercle, est reliée par une liaison fixe de rotation avec l'arbre à plateau (30).

11. Unité d'entraînement selon l'une des revendications 1 à 7,
**caractérisée en ce qu'**une pièce de carter (24) en forme de cloche du moteur électrique (15), dans laquelle est agencé le stator, est liée par une liaison fixe de rotation avec l'arbre de sortie (19).

12. Unité d'entraînement selon la revendication 11,
**caractérisée en ce que** l'arbre de sortie (19) et/ou la couronne (35) forment une partie de couvercle entre laquelle et la pièce de carter (24) agissent des moyens (40) de liaison fixe de rotation.

13. Unité d'entraînement selon l'une des revendications 11 ou 12,
**caractérisée en ce que** la pièce de carter (24) est montée rotative sur l'arbre d'entrée (17).

14. Unité d'entraînement selon l'une des revendications 1 à 13,
**caractérisée en ce que** la pièce de carter (24) du moteur électrique (15) est dotée de moyens de réception de courant, qui coopèrent avec des moyens (21) en position fixe pour l'alimentation en courant.

15. Unité d'entraînement selon l'une des revendications 1 à 14,
**caractérisée en ce que** le rotor (22) du moteur électrique (15) est formé par des aimants permanents.

16. Véhicule automobile (1) à plusieurs essieux moteurs avec au moins un premier essieu moteur (2) et au moins un deuxième essieu moteur (3), et comprenant
- une source d'entraînement primaire, qui est reliée sur le plan de la transmission d'entraînement au premier essieu moteur (2), par l'intermédiaire d'une première ligne de transmission d'entraînement (9), et qui est reliée sur le plan de la transmission d'entraînement au deuxième essieu moteur (3) par l'intermédiaire d'une deuxième ligne de transmission d'entraînement (10),
- une unité d'entraînement (20) qui est agencée dans la deuxième ligne de transmission d'entraînement (10), et présente une boite de transmission de superposition (14) qui comprend un premier arbre d'entrée (17), un deuxième arbre d'entrée (18) et un arbre de sortie (19), ainsi qu'un moteur électrique (15) en guise de source d'entraînement secondaire, le premier arbre d'entrée (17) étant relié sur le plan de la transmission d'entraînement à la source d'entraînement primaire, le deuxième arbre d'entrée (18) au moteur électrique (15), et l'arbre de sortie (19) au deuxième essieu (3), le moteur électrique (15) étant par ailleurs lié, avec ses parties rotor et stator, par une liaison fixe de rotation, respectivement avec des organes en révolution différents de la boite de transmission de superposition (14).

17. Véhicule automobile selon la revendication 16,
**caractérisé en ce que** la source d'entraînement primaire est formée par une unité constituée d'un moteur à combustion interne et d'une boite de transmission à rapport de démultiplication variable.

18. Véhicule automobile selon l'une des revendications 16 ou 17,
**caractérisé en ce que** le premier essieu moteur (2) est un essieu arrière dont les roues (4, 4') sont non directrices.

19. Véhicule automobile selon l'une des revendications 16 à 18,
**caractérisé en ce que** le moteur à combustion interne (7) et la boite de transmission (8) sont associés spatialement à l'essieu arrière.

20. Véhicule automobile selon l'une des revendications 16 à 19,
**caractérisé en ce que** le premier essieu moteur (2) comprend un premier différentiel d'essieu (12), et le deuxième essieu moteur (3) un deuxième différentiel d'essieu (13).

21. Véhicule automobile selon l'une des revendications 16 à 20,
**caractérisé en ce que** le moteur électrique (15) avec ses parties rotor (22) et stator (23) est relié, respectivement, au premier arbre d'entrée (17) et au deuxième arbre d'entrée (18) de la boite de transmission de superposition (14).

22. Véhicule automobile selon l'une des revendications 16 à 20,
**caractérisé en ce que** le moteur électrique avec ses parties rotor (22) et stator (23) est relié, respectivement, à l'un des arbres d'entrée (17, 18) et à l'arbre de sortie (19) de la boite de transmission de superposition (14).

23. Véhicule automobile selon l'une des revendications 16 à 22,
**caractérisé en ce que** la boite de transmission de superposition (14) est un train épicycloïdal comprenant un arbre à plateau, une roue centrale ou planétaire (25), au moins un satellite (31) et une couronne (35), boite dans laquelle
- le premier arbre d'entrée (17) est l'arbre à plateau et porte de manière rotative ledit au moins un satellite (31) selon un agencement excentré,
- le deuxième arbre d'entrée (18) est lié par une liaison fixe de rotation avec la roue planétaire (25), et
- la couronne (35) est liée par une liaison fixe de rotation avec l'arbre de sortie (19).

24. Véhicule automobile selon la revendication 23,
**caractérisé en ce que** le deuxième arbre d'entrée (18) est réalisé sous forme d'arbre creux.

25. Véhicule automobile selon l'une des revendications 23 ou 24,
**caractérisé en ce que** la roue planétaire (25) et/ou le deuxième arbre d'entrée (18) sont montés rotatifs sur le premier arbre d'entrée (17).

26. Véhicule automobile selon l'une des revendications 23 à 25,
**caractérisé en ce que** le premier arbre d'entrée (17) d'une part et la couronne (35) et/ou l'arbre de sortie (19) d'autre part sont montés rotatifs directement l'un dans l'autre.

27. Véhicule automobile selon l'une des revendications 16 à 26,
**caractérisé en ce qu'**une pièce de carter (24) en forme de cloche du moteur électrique (15), dans laquelle est agencé le stator (23), est liée par une liaison fixe de rotation avec le premier arbre d'entrée (17).

28. Véhicule automobile selon la revendication 27,
**caractérisé en ce que** l'arbre de sortie (19) et/ou la couronne (35) forment une partie de couvercle (37) entre laquelle et la pièce de carter (24) sont prévus des moyens d'étanchéité à la rotation (38).

29. Véhicule automobile selon l'une des revendications 27 ou 28,
**caractérisé en ce que** la pièce de carter (24), à son extrémité côté couvercle, est reliée par une liaison fixe de rotation avec l'arbre à plateau (30).

30. Véhicule automobile selon l'une des revendications 16 à 26,
**caractérisé en ce qu'**une pièce de carter (24) en forme de cloche du moteur électrique (15), dans laquelle est agencé le stator, est liée par une liaison fixe de rotation avec l'arbre de sortie (19).

31. Véhicule automobile selon la revendication 30,
**caractérisé en ce que** l'arbre de sortie (19) et/ou la couronne (35) forment une partie de couvercle entre laquelle et la pièce de carter (24) agissent des moyens de liaison fixe de rotation.

32. Véhicule automobile selon l'une des revendications 30 ou 31,
**caractérisé en ce que** la pièce de carter (24) est montée rotative sur l'arbre d'entrée (17).

33. Véhicule automobile selon l'une des revendications 16 à 32,
**caractérisé en ce que** la pièce de carter (24) du moteur électrique (15) est dotée de moyens de réception de courant, qui coopèrent avec des moyens (21) en position fixe pour l'alimentation en courant.

34. Véhicule automobile selon l'une des revendications 16 et 33,
**caractérisé en ce que** le rotor (22) du moteur électrique (15) est formé par des aimants permanents.

35. Procédé pour la régulation de l'entraînement d'un véhicule automobile à plusieurs essieux moteurs selon l'une des revendications 16 à 34,
**caractérisé en ce que** le moteur électrique (15) est régulé en vitesse de rotation en fonction de grandeurs d'état de marche, le deuxième essieu moteur (3) étant entraîné par la source d'entraînement secondaire en commun avec la source d'entraînement primaire par l'intermédiaire de la boite de transmission de superposition (14), en fonction de la vitesse de rotation du moteur électrique (15).

36. Procédé pour la régulation de l'entraînement d'un véhicule automobile à plusieurs essieux moteurs selon l'une des revendications 16 à 34,
**caractérisé en ce que** le moteur électrique (15) est alimenté en courant ou est déconnecté électriquement en fonction de grandeurs d'état de marche, le deuxième essieu moteur (3) étant entraîné par la source d'entraînement secondaire en commun avec la source d'entraînement primaire par l'intermédiaire de la boite de transmission de superposition (14), en fonction de l'état d'alimentation en courant du moteur électrique (15).

37. Procédé selon l'une des revendications 35 ou 36,
**caractérisé en ce que** le moteur électrique (15), pour une marche non freinée en ligne droite du véhicule automobile (1), est alimenté en courant de façon telle que son rotor (22) et son stator (23) soient immobiles l'un par rapport à l'autre.

38. Procédé selon l'une des revendications 35 à 37,
**caractérisé en ce que** par l'entraînement du moteur électrique (15), la vitesse de rotation de l'arbre de sortie (19), pour une marche en courbe, est régulée de façon telle que les roues (5, 5') du deuxième essieu moteur (3) roulent sans glisser.

39. Procédé selon l'une des revendications 35 à 38,
**caractérisé en ce que** la vitesse de rotation du deuxième essieu moteur (3) est régulée par l'entraînement du moteur électrique (15), en marche en courbe du véhicule automobile (1), en fonction de l'angle de braquage d'un essieu directeur du véhicule automobile.

40. Procédé selon l'une des revendications 35 à 39,
**caractérisé en ce que** le couple du deuxième essieu moteur (3) pour l'entraînement sans glissement par alimentation en courant du moteur électrique (15), est régulé en fonction des vitesses de rotation du premier essieu moteur et du deuxième essieu moteur.

41. Procédé selon l'une des revendications 35 à 39,
**caractérisé en ce que** le moteur électrique (15), lorsqu'un système de régulation dynamique de marche du véhicule automobile est activé, est déconnecté électriquement respectivement régulé/activé.

42. Procédé selon l'une des revendications 35 à 41,
**caractérisé en ce que** le moteur électrique (15), lors de l'actionnement d'une installation de freinage du véhicule automobile, équipée d'un système ABS, est déconnecté électriquement respectivement régulé/activé.
